Europäisches Patentamt

European Patent Office

Office européen des brevets

(19)

(11) Numéro de publication : **0 032 327**

**B1**

(12) **FASCICULE DE BREVET EUROPÉEN**

(45) Date de publication du fascicule du brevet :
16.02.83

(51) Int. Cl.³ : **H 04 B   1/74**

(21) Numéro de dépôt : **80401703.6**

(22) Date de dépôt : **28.11.80**

(54) **Procédé et installation de sécurisation d'une artère de transmission numérique.**

(30) Priorité : **11.01.80 FR 8000621**

(43) Date de publication de la demande :
**22.07.81 Bulletin 81/29**

(45) Mention de la délivrance du brevet :
**16.02.83 Bulletin 83/07**

(84) Etats contractants désignés :
**BE CH DE GB IT LI NL**

(56) Documents cités :
**NATIONAL TELECOMMUNICATIONS CONFE-
RENCE, 1973, Conference Record, vol. 2, 1973
New York, US J.W. WUERTELE : « T1 Protection
switching », pages 34 E-1 à 34 E-4**

(73) Titulaire : **SOCIETE ANONYME DE TELECOMMUNI-
CATIONS**
**41, rue Cantagrel**
**F-75624 Paris Cedex 13 (FR)**

(72) Inventeur : **Bargeton, Gilbert L.**
**66, rue Servan**
**F-75011 Paris (FR)**
Inventeur : **Beynie, Claude P.**
**30, rue du Bois des Moines**
**94210 LA VARENNE (FR)**

(74) Mandataire : **Cabinet Martinet**
**62, rue des Mathurins**
**F-75008 Paris (FR)**

# Procédé et installation de sécurisation d'une artère de transmission numérique

La présente invention concerne un procédé de sécurisation d'une artère de transmission numérique ayant N lignes normales bidirectionnelles et P lignes de secours bidirectionnelles. Cette artère relie deux stations d'extrémité qui comprennent chacune un permutateur bidirectionnel commandé par une unité de supervision qui supervise les ordres de permutation. L'invention a trait plus particulièrement à un procédé de sécurisation d'une ligne normale d'une telle artère selon lequel, en réponse à une alarme relative à un défaut sur une ligne normale, les deux permutateurs procèdent à un premier échange d'ordres à travers une ligne de secours présélectionnée, puis à une première permutation de l'information relative à la ligne en défaut vers la ligne de secours et, après réparation et arrêt de ladite alarme, à un second échange d'ordres à travers ladite ligne réparée, pendant que l'information relative à ladite ligne réparée continue à être transmise à travers une ligne de secours présélectionnée, et à une seconde permutation de l'information, précédemment transmise sur la ligne de secours, vers la ligne réparée. La présente invention est également relative à l'installation de sécurisation pour la mise en œuvre de ce procédé.

L'article de A. Chomette, J. Guiomar et M. Robinet, intitulé « Sécurisation et supervision d'un réseau numérique urbain », paru dans le numéro de janvier 1979, pages 12 à 19 de la revue française « L'Echo des Recherches », décrit un procédé de sécurisation d'une ligne normale d'une artère de transmission numérique. Selon cet article, la fonction essentielle d'un permutateur consiste à commuter une ligne normale sur une ligne de secours présélectionnée, dès la détection d'un défaut sur la ligne normale. Ceci évite pratiquement la perte de l'information transmise par la ligne normale en défaut, c'est-à-dire l'interruption des communications en cours supportées par la ligne normale pendant la durée de réparation de celle-ci.

Pour ce faire, la partie émission du permutateur d'une station qui est destinée à transmettre des informations vers l'autre station à travers l'artère de transmission, comprend, relativement à chaque ligne de transmission normale, des moyens de commutation qui sont associés à chaque ligne de secours et qui permettent de relier l'amont de la ligne normale défectueuse à la ligne de secours, pour transmettre des informations relatives à la ligne défectueuse, après détection d'une alarme indiquant un défaut de transmission de ladite ligne normale. Ces moyens de commutation sont, en l'absence d'alarme, uniquement reliés à la ligne de secours. Ils permettent, lorsque cette ligne de secours est sélectionnée, à l'unité de supervision de transmettre des premiers ordres vers l'autre station, préalablement à toute première permutation. La partie réception du permutateur d'une station qui est destinée à recevoir des informations de l'autre station à travers l'artère de transmission, comprend, relativement à chaque ligne de transmission normale, des moyens de commutation reliés à chaque ligne de secours, qui permettent de relier la ligne de secours à l'aval de la ligne défectueuse pour recevoir des informations relatives à la ligne défectueuse, après détection d'une alarme relative à celle-ci. Ces derniers moyens de commutation sont, en l'absence d'alarme, uniquement reliés à la ligne de secours. Ils permettent, à travers cette ligne de secours sélectionnée, à l'unité de supervision de recevoir les premiers ordres provenant du permutateur de l'autre station, puis à l'unité de supervision en aval de la ligne défectueuse de recevoir l'information relative à la ligne défectueuse pendant la réparation de celle-ci, et enfin à l'unité de supervision de recevoir les seconds ordres, après arrêt de l'alarme due à la réparation de la ligne. Ce dernier échange d'ordres s'effectue également sur la ligne de secours et, par conséquent, nécessite l'interruption momentanée des communications relatives à la ligne. Après ce second échange d'ordres, une seconde permutation rétablit la transmission normale à travers la ligne dépannée.

Dans le cas simple où le nombre de lignes de secours est égal à l'unité ($P = 1$), un tel procédé de sécurisation ne permet pas de disposer d'une ligne pour transmettre des ordres lorsqu'une ligne normale est secourue. En effet, deux cas peuvent se présenter pour lesquels il est important de pouvoir échanger des ordres entre les deux permutateurs. Un premier cas est celui où une seconde ligne normale de la même artère devient également défectueuse. Un second cas est celui où la ligne en défaut, dont les communications sont acheminées sur la ligne de secours, est remise en état.

Dans le premier cas, si la seconde ligne normale en défaut est prioritaire, il n'y a pas d'inconvénient à interrompre le trafic de la ligne de secours pour le passage des ordres et à attribuer cette ligne de secours à la sécurisation de la ligne prioritaire en défaut ; si, par contre, la seconde ligne défectueuse n'est pas prioritaire sur la première, ladite seconde ligne n'est pas secourue et son trafic est interrompu.

Dans le second cas, relatif à la remise en état de la ligne en défaut, il est nécessaire d'échanger des seconds ordres avant de commander la permutation du trafic de la ligne de secours à la ligne normale réparée. Selon l'art antérieur, ce second échange d'ordres ne peut se faire qu'en interrompant momentanément le trafic de la ligne de secours, ce qui peut être très ennuyeux, notamment lorsque la ligne secourue est une ligne prioritaire ou une ligne convoyant des données, par exemple entre un terminal et un ordinateur, dont la transmission ne doit pas être interrompue.

L'Article de J. W. WUERTELE paru dans la revue « NATIONAL TELECOMMUNICATIONS CONFERENCE », 1973, Conference Record, volume 2, 1973, NEW-YORK (US), décrit un procédé de sécurisation du type défini dans l'entrée en matière. Il obvie aux inconvénients du procédé selon l'Article de A. CHOMETTE et consorts, par le fait que le second échange d'ordres n'a pas lieu à travers la ligne de secours présélectionnée, mais à travers la ligne réparée pendant que l'information relative à cette ligne réparée continue à être transmise à travers la ligne de secours présélectionnée. Par suite, ces conditions ne provoquent pas l'interruption sur la ligne de secours du trafic relatif à la ligne normale réparée.

Cependant, selon l'Article de J. W. WUERTELE, il apparaît que la partie réception de l'unité de permutation d'une station d'extrémité est, pendant toute la durée de la réparation, jusqu'avant la seconde permutation, reliée à la ligne normale pour recevoir, à travers celle-ci, des signaux de test. Ainsi, jusqu'avant la seconde permutation, c'est-à-dire avant le second échange d'ordres, la ligne normale défectueuse est reliée aux parties émissions et réceptions d'ordres des stations. Si une seconde ligne normale devient défectueuse avant que la première ligne normale soit réparée et si la seconde ligne est prioritaire sur la première, aucun échange d'ordres ne pourra avoir lieu entre les stations tant que la première ligne normale n'est pas réparée.

La présente invention a pour but de s'affranchir notamment de ce dernier inconvénient, c'est-à-dire permettre un second échange d'ordres pour la sécurisation d'une ligne prioritaire, même si une ligne normale est en cours de réparation.

A cette fin, le procédé de sécurisation d'une ligne normale, tel que défini dans l'entrée en matière, est caractérisé en ce que, depuis le début du premier échange d'ordres et jusqu'avant le second échange d'ordres, des ordres peuvent être reçus dans chaque permutateur à travers la ligne de secours présélectionnée en réponse à une alarme relative à un défaut sur une autre ligne normale et en ce que, tant que l'alarme relative à la première ligne en défaut est présente, des ordres transmis par l'un des permutateurs à travers ladite première ligne ne peuvent pas être reçus par l'autre permutateur.

L'installation de sécurisation pour la mise en œuvre du procédé selon l'invention est caractérisée en ce que, relativement à chaque ligne de transmission normale, la partie émission de chaque permutateur comprend des moyens de commutation, normalement transparents à l'information convoyée par la ligne, pour permettre la transmission d'ordres par l'unité de supervision sur ladite ligne après ledit premier échange d'ordres, et la partie réception de chaque permutateur comprend des moyens de commutation, normalement transparents aux ordres et à l'information convoyés par la ligne de secours présélectionnée pendant le premier échange d'ordres et la durée de réparation de la ligne en défaut pour que l'unité de supervision reçoive, à travers la ligne normale réparée, les ordres dudit second échange en réponse à l'arrêt de ladite alarme, lesdits moyens de commutation revenant à leur état normal lors de ladite seconde permutation.

Le fait que les moyens de commutation de la partie réception d'une station sont reliés en permanence à la ligne de secours permet de recevoir des ordres à travers la ligne de secours, dans le cas d'une ligne prioritaire à sécuriser au cours de la réparation d'une autre ligne.

L'invention sera mieux comprise à la lecture de la description qui suit de plusieurs exemples de réalisation d'une installation de sécurisation conforme à l'invention et à l'examen des dessins annexés correspondants, dans lesquels :

la Figure 1 est un bloc-diagramme très schématique d'une artère de transmission à N lignes normales et une ligne de secours entre deux stations d'extrémité ;

la Figure 2 représente en détail la partie émission du permutateur d'une station de la Fig. 1 conforme à l'invention ;

la Figure 3 représente en détail la partie réception du permutateur d'une station de la Fig. 1 conforme à l'invention ; et

la Figure 4 est un bloc-diagramme schématique de l'unité de supervision des ordres de permutation d'une station d'extrémité conforme à l'invention.

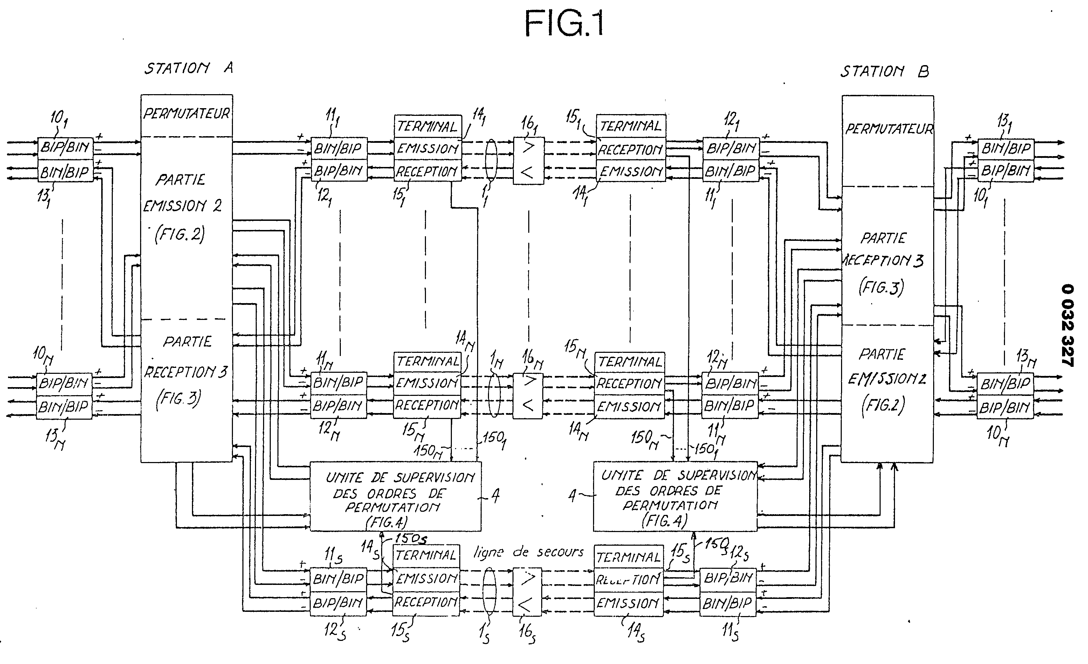

En se référant à la Fig. 1, on a représenté une artère de transmission numérique bidirectionnelle entre deux stations d'extrémité A et B. On suppose que cette artère est composée de N lignes numériques bidirectionnelles normales $1_1$ à $1_N$, par exemple au nombre de 19, et de $P = 1$ ligne numérique bidirectionnelle de secours $1_S$. Chaque ligne numérique présente par exemple un débit de 2 048 kbit/s et est du type à paire de câbles symétriques. Les deux stations d'extrémité A et B incluent pour les deux directions de transmission, A vers B et B vers A, tous les moyens concernant la surveillance de chaque ligne de transmission, à savoir les moyens de supervision et de maintenance pour la télélocalisation de défauts, les sources de téléalimentation, les détecteurs d'alarme, etc... Seuls, les organes destinés à la sécurisation des lignes dites normales $1_1$ à $1_N$ seront détaillés dans la suite.

On notera dès maintenant que, pour chaque station d'extrémité considérée A ou B, le terme « émission » se rapporte à la transmission ou à un organe de transmission d'un signal de la station considérée vers l'autre et le terme « réception », à la transmission ou un organe de transmission selon l'autre direction, de l'autre station vers la station considérée. La structure et l'organisation des stations étant identiques, on désignera dans la suite par les mêmes repères numériques les organes ayant trait à des fonctions identiques aussi bien dans l'une que dans l'autre station. Pour décrire les organes de sécurisation inclus dans les stations, on se référera ci-dessous par exemple à la station A, à gauche sur la Fig. 1, la direction d'émission étant de A vers B et la direction de réception étant de B vers A.

Chaque ligne numérique normale $1_1$ à $1_N$ reçoit de l'amont et émet vers l'aval par rapport à la station A des signaux numériques dont le code en ligne est, selon la réalisation préférée illustrée, un code bipolaire HDBn, par exemple le code HDB3. Les signaux informatifs et d'ordre traités dans la station A ou, plus précisément, dans les parties émission 2 et réception 3 du permutateur de la station, sont deux trains binaires $HDBn^+$ et $HDBn^-$ qui représentent respectivement les impulsions positives et négatives d'un signal bipolaire. Ainsi, le signal bipolaire reçu en amont de la station A, selon la direction A vers B, est converti en deux trains binaires $HDBn^+$ et $HDBn^-$ dans un convertisseur bipolaire-binaire $10_1$ à $10_N$ dont les deux fils de sortie correspondants $10_1{}^+$ à $10_N{}^+$ et $10_1{}^-$ et $10_N{}^-$ sont reliés normalement aux deux entrées $11_1{}^+$ à $11_N{}^+$ et $11_1{}^-$ à $11_N{}^-$ d'un convertisseur binaire-bipolaire de sortie $11_1$ à $11_N$, à travers la partie émission 2 du permutateur. Selon l'autre direction de transmission B vers A, un convertisseur bipolaire-binaire $12_1$ à $12_N$ convertit le signal bipolaire transmis par la station B sur la ligne $1_1$ à $1_N$ en deux trains numériques $HDBn^+$ et $HDBn^-$. Les deux sorties $12_1{}^+$ à $12_N{}^+$ et $12_1{}^-$ à $12_N{}^-$ du convertisseur $12_1$ à $12_N$ sont reliées aux deux entrées $13_1{}^+$ à $13_N{}^+$ et $13_1{}^-$ à $13_N{}^-$ d'un convertisseur binaire-bipolaire $13_1$ à $13_N$, à travers la partie réception 3 du permutateur de la station A. On notera que chaque convertisseur $10_1$ à $10_N$ et $13_1$ à $13_N$ peut être relié, via un terminal et/ou un permutateur, à une ligne numérique d'un même type au débit de 2 048 kbit/s ou, le cas échéant, à des moyens de multiplexage et démultiplexage à division du temps si l'artère en aval de la station A, selon la direction de réception B vers A, est composée de lignes à débit supérieur, par exemple à 8 448 kbit/s ou à débit inférieur de 64 kbit/s qui correspond à celui d'une voie téléphonique d'abonné.

Comme montré schématiquement à la Fig. 1, chaque ligne numérique dite normale $1_1$ à $1_N$ ou chaque ligne de secours telle que $1_S$ est composée, à partir de la station A, outre d'une paire de convertisseurs binaire-bipolaire et bipolaire-binaire $11_1$-$12_1$ à $11_N$-$12_N$, $11_S$-$12_S$, d'un terminal de ligne, côté de la station A, d'une pluralité de répéteurs-régénérateurs bidirectionnels 16 et d'un autre terminal de ligne, côté station B. Chaque terminal comprend un circuit d'émission $14_1$ à $14_S$ qui reçoit le signal bipolaire du convertisseur $11_1$ à $11_S$ et un circuit de réception $15_1$ à $15_S$ qui transmet au convertisseur $12_1$ à $12_S$ le signal reçu de l'autre station à travers la ligne $1_1$ à $1_S$. Ce type de terminal numérique bien connu comprend un répéteur-régénérateur bidirectionnel, des circuits de mise en forme en code de ligne et dans la bande de fréquence utile ainsi qu'un circuit de restitution du signal informatif, et des circuits couplés à la ligne par des filtres séparateurs pour introduire et détecter la téléalimentation, les signaux de supervision (signaux pilotes, de télélocalisation, etc.) relativement à la

ligne $1_1$ à $1_S$.

En particulier, le circuit de réception $15_1$ à $15_S$ d'un terminal comprend un circuit de détection de défauts propres à la ligne $1_1$ à $1_S$, suivant la direction de réception, par exemple, B vers A, pour les terminaux de la station A. Le circuit de détection de défauts détecte, entre autres, l'un des défauts suivants de transmission, suivant la direction de réception :

— défaillance de la téléalimentation ;

— perte de rythme du signal reçu, c'est-à-dire absence de signaux d'horloge ;

— taux d'erreurs supérieur à une valeur prédéterminée par vérification du code en ligne du signal reçu ; dans le cas présent où le signal est en code HDBn, détection d'erreurs de viols de bipolarité ;

— absence du signal reçu correspondant à au moins une coupure de ligne au niveau d'une section de la ligne entre deux répéteurs-régénérateurs 16 ou au moins d'un organe interne d'un répéteur-régénérateur ou, plus généralement, détection d'un affaiblissement dû à des pertes, par exemple par effet Joule dans un répéteur-régénérateur ou à une mauvaise auto-régulation du gain d'amplification d'un répéteur-régénérateur.

Dès la détection d'un tel défaut de transmission, le circuit de réception $15_1$ à $15_S$ de la ligne défectueuse transmet à une unité de supervision des ordres de permutation 4 un signal d'alarme sur le fil $150_1$ à $150_S$ et également, comme il est connu, un signal d'indication d'alarme (SIA) en aval du circuit de réception, afin d'indiquer aux autres stations et au central de commutation distant que la ligne est en dérangement momentanément. Comme on le verra dans la suite, un signal d'alarme initialise dans l'unité 4 la permutation de la transmission numérique de la ligne normale défectueuse $1_1$ à $1_N$ vers une ligne de secours $1_S$ ou, lorsque la ligne défectueuse est une ligne de secours, éventuellement la permutation des signaux transmis par celle-ci sur une autre ligne de secours libre.

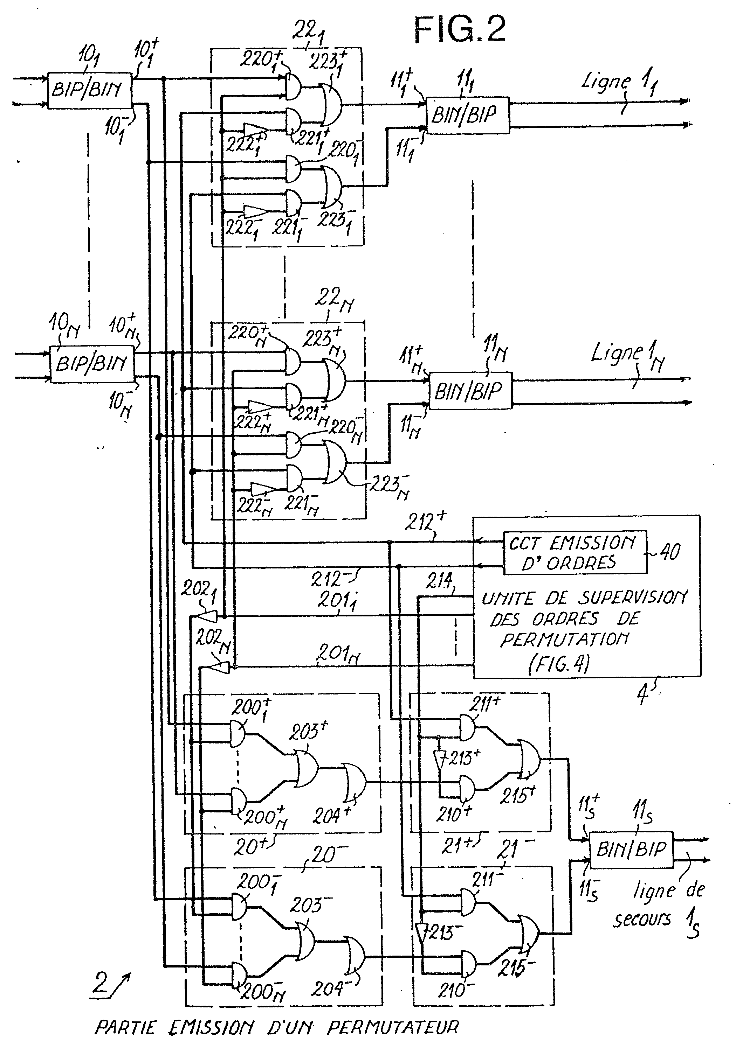

En se référant maintenant à la Fig. 2 représentant la partie émission d'un permutateur d'une station A ou B, on retrouve les circuits de sélection et de commutation $20^+$, $20^-$, $21^+$ et $21^-$ inclus dans la partie émission des permutateurs connus. Les circuits $20^+$ et $20^-$ ont trait à la sélection de la ligne défectueuse parmi les N lignes normales $1_1$ à $1_N$. Ils comprennent chacun N portes ET $200_1{}^+$ à $200_N{}^+$, $200_1{}^-$ à $200_N{}^-$ dont les entrées numériques sont reliées respectivement aux sorties $10_1{}^+$ à $10_N{}^+$, $10_1{}^-$ à $10_N{}^-$ des convertisseurs bipolaires-binaires $10_1$ à $10_N$. Les entrées de commande des paires de portes ET $200_1{}^+$-$200_1{}^-$ à $200_N{}^+$-$200_N{}^-$ sont reliées, à travers un inverseur $202_1$ à $202_N$, à un fil d'un bus d'adresse $201_1$ à $201_N$ sortant de l'unité de supervision des ordres de permutation 4. Les sorties des portes ET $200_1{}^+$ à $200_N{}^+$, $200_1{}^-$ à $200_N{}^-$ d'un circuit de sélection $20^+$, $20^-$ sont reliées, à travers une porte OU $203^+$, $203^-$ et, éventuellement, à travers une seconde porte OU $204^+$, $204^-$ selon d'autres variantes, à l'entrée numérique d'une porte ET $210^+$, $210^-$ du circuit de commutation correspondant $21^+$, $21^-$. Une autre porte ET $211^+$, $211^-$ du circuit $21^+$, $21^-$ permet d'introduire, à travers un fil de sortie numérique $212^+$, $212^-$, des signaux d'ordre à partir du circuit d'émission d'ordres 40 de l'unité 4. Les entrées de commande des portes ET $210^+$, $210^-$ et $211^+$, $211^-$ de chaque circuit de commutation $21^+$, $21^-$ sont reliées à travers un inverseur $213^+$, $213^-$ et directement à un fil de commande de permutation 214 issu de l'unité 4. Les sorties des portes ET $210^+$, $211^+$ et les sorties des portes ET $210^-$, $211^-$ sont reliées, à travers des portes OU $215^+$ et $215^-$, aux entrées respectives $11_S^+$ et $11_S^-$ du convertisseur binaire-bipolaire $11_S$.

Ainsi, lorsque l'unité 4 a détecté sur l'un des fils $150_1$ à $150_N$ un signal d'alarme, par exemple sur le fil $150_3$ correspondant à la ligne défectueuse $1_3$ selon la direction de transmission de réception, elle émet un signal sur le fil $201_3$ pour ouvrir les portes $200_3^+$ et $200_3^-$. Simultanément, l'unité 4 émet un signal sur le fil 213 pour fermer les portes ET $211^+$ et $211^-$ et ouvrir les portes ET $210^+$ et $210^-$ afin que le signal numérique informatif transite, à travers le permutateur, du convertisseur bipolaire-binaire $10_3$ vers le convertisseur binaire-bipolaire $11_S$ de la ligne de secours $1_S$. Normalement, en l'absence de toute sécurisation, les portes $210^+$ et $210^-$ sont fermées et les portes $211^+$ et $211^-$ sont ouvertes pour permettre l'émission de signaux d'ordre de l'unité 4 de la station considérée vers le circuit de réception d'ordres 41 de l'unité 4 de l'autre station, à travers la ligne de secours $1_S$. On notera que, selon l'Article de A. CHOMETTE et consorts, les sorties $10_1^+$, $10_1^-$ à $10_N^+$, $10_N^-$ des convertisseurs bipolaires-binaires $10_1$ à $10_N$ sont en permanence reliées directement aux entrées $11_1^+$, $11_1^-$ à $11_N^+$, $11_N^-$ des convertisseurs $11_1$ à $11_N$ des lignes $1_1$ à $1_N$. Par conséquent, on voit que, après qu'une ligne normale, telle que $1_3$, ait été sécurisée, pour rétablir l'état normal après réparation de cette ligne, il est nécessaire d'interrompre d'abord la transmission numérique sur la ligne de secours pour échanger des ordres qui permettront les commutations simultanées de la transmission d'information de la ligne de secours $1_S$ à la ligne réparée $1_3$ dans les deux stations d'extrémité A et B.

Conformément à l'invention, la partie émission 3 d'un permutateur comprend, en outre, des circuits de commutation $22_1$ à $22_N$ respectivement assignés aux lignes normales $1_1$ à $1_N$. Chacun d'eux comprend deux portes ET $220_1^+$ à $220_N^+$ et $220_1^-$ à $220_N^+$ et deux portes ET $221_1^+$ à $221_N^+$ et $221_1^-$ à $221_N^-$. Les entrées numériques des portes ET $220^+$ et $220^-$ d'un circuit 22 sont reliées aux sorties $10^+$ et $10^-$ du convertisseur bipolaire-binaire correspondant 10. Les entrées numériques des portes ET $221^+$ et $221^-$ d'un circuit 22 sont reliées aux fils de sortie $212^+$ et $212^-$ du circuit d'émission d'ordres 40. Les entrées de commande des portes ET $220^+$ et $220^-$ du circuit 22 sont reliées directement au fil de sortie 201 correspondant à l'unité 4. Les entrées de commande des portes $221^+$ et $221^-$ sont reliées à travers deux inverseurs $222^+$ et $222^-$ au fil 201 correspondant. Les sorties des portes $220^+$ et $221^+$ et les sorties des portes $220^-$ et $221^-$ sont reliées, à travers deux portes OU $222^+$ et $222^-$, aux entrées $11^+$ et $11^-$ du convertisseur binaire-bipolaire correspondant 11.

Ainsi, selon l'invention, lorsqu'une ligne normale, telle que $1_3$, doit être secourue, outre les ouvertures des portes $200_3^+$, $200_3^-$, $210^+$, $210^-$ et la fermeture des portes $211^+$, $211^-$, il y a aussi, simultanément, fermetures des portes $220_3^+$ et $220_3^-$ et ouvertures des portes $221_3^+$ et $220_3^-$. Ces dernières ouvertures permettent alors le second échange d'ordres entre les stations lorsque la ligne $1_3$ est réparée, sans interruption de trasmission d'information sur la ligne de secours et précédemment à la commutation pour revenir au fonctionnel normal.

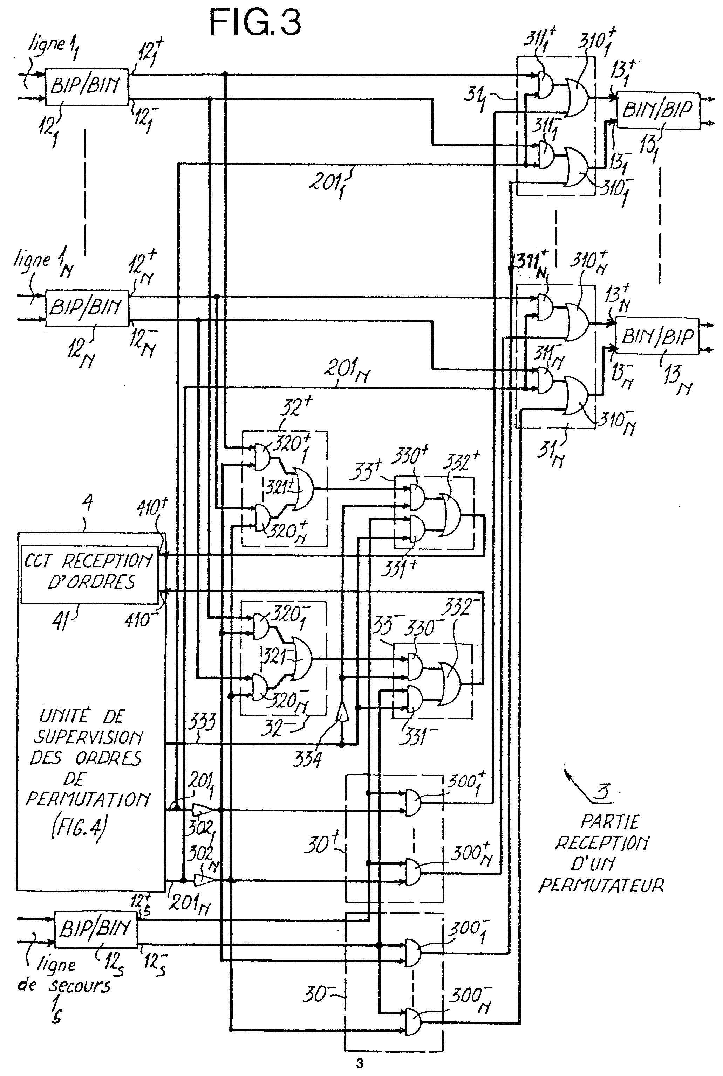

La Fig. 3 montre la partie de réception 3 d'un permutateur d'une station A ou B. Elle comprend, de manière connue, deux circuits de sélection $30^+$, $30^-$ des lignes selon la direction de réception et N circuits de commutation $31_1$ à $31_N$ entre les lignes normales et la ligne de secours.

Les circuits de sélection $30^+$ et $30^-$ sont respectivement affectés aux trains numériques HDBn$^+$ et HDBn$^-$ qui sont délivrés par les sorties $12_S^+$ et $12_S^-$ du convertisseur bipolaire-binaire $12_S$ de la ligne de secours. Le train HDBn$^+$ est fourni aux entrées numériques de N portes $300_1^+$ à $300_N^+$ du circuit $30^+$ et le train HDBn$^-$ est fourni aux entrées numériques de N portes ET $300_1^-$ à $300_N^-$ du circuit $30^-$. Chaque paire de portes ET $300_1^+$-$300_1^-$ à $300_1^-$-$300_N^-$ est commandée par le fil correspondant $201_1$ à $201_N$, à travers un inverseur $302_1$ à $302_N$. Les sorties de deux portes associées $300^+$-$300^-$ sont reliées, à travers deux portes OU $310^+$ et $310^-$ du circuit de commutation respectif 31, aux entrées $13^+$ et $13^-$ du convertisseur binaire-bipolaire 13. Un circuit de commutation 31 comporte également deux portes ET $311^+$ et $311^-$ dont les entrées numériques sont reliées aux sorties $12^+$ et $12^-$ du convertisseur bipolaire-binaire correspondant 12 et dont les sorties sont reliées, à travers les deux portes OU $310^+$ et $310^-$, aux entrées $13^+$ et $13^-$ du convertisseur 13. Les entrées de commande des portes $311^+$ et $311^-$ sont reliées directement au fil associé 201. Par ailleurs, toujours selon l'art antérieur précité, les sorties $12_S^+$ et $12_S^-$ du convertisseur $12_S$ de la ligne de secours sont reliées directement aux entrées du circuit de réception d'ordres de l'unité 4.

On voit que, selon cet art antérieur, le circuit de réception d'ordres 41 est toujours relié à la ligne de secours $1_S$ et que le signal convoyé par une ligne normale $1_1$ à $1_N$ ne peut qu'être délivré vers l'aval de la station, notamment à travers le convertisseur binaire-bipolaire $13_1$ à $13_N$. Par conséquent, pour recevoir des ordres à partir du circuit d'émission d'ordres 40 de l'autre station, il est nécessaire de fermer les portes ET $300^+$ et $300^-$ correspondant à la ligne secourue et donc d'interrompre la transmission numérique sur la ligne de secours, avant le rétablissement de cette transmission sur la ligne réparée.

Conformément à l'invention, la partie réception 3 d'un permutateur comprend, en outre, deux circuits de sélection $32^+$ et $32^-$ qui sélectionnent les extrémités de lignes $1_1$ à $1_N$ côté réception, et deux circuits de commutation $33^+$ et $33^-$. Ces circuits supplémentaires permettent de commuter la transmission des ordres reçus, après réparation d'une ligne, de la ligne de secours à la ligne réparée et, après échange d'ordres à la fin de la procédure de réparation, de la ligne réparée à la ligne de secours.

Chacun des circuits de sélection $32^+$ et $32^-$ comprend N portes ET $320_1{}^+$ à $320_N{}^+$, $320_1{}^-$ à $320_N{}^-$ et une porte OU $321^+$, $321^-$ reliées aux sorties des portes précédentes. Les entrées numériques de deux portes associées ET $320^+$ et $320^-$ sont reliées aux sorties $12^+$ et $12^-$ du convertisseur bipolaire-binaire correspondant 12. Une paire de portes $320^+$-$320^-$ est commandée par l'unité 4 à travers le fil 201 et l'inverseur 302 correspondants. Dans chaque circuit de commutation $33^+$, $33^-$, une porte ET $330^+$, $330^-$ a son entrée numérique reliée à la sortie de la porte OU correspondante $321^+$, $321^-$ et une autre porte ET $331^+$, $331^-$ a son entrée numérique reliée à la sortie $12_S{}^+$, $12_S{}^-$ du convertisseur bipolaire-binaire $12_S$ de la ligne de secours. Les sorties des portes $330^+$ et $331^+$ sont reliées à l'entrée positive $410^+$ du circuit de réception d'ordres 41, à travers une porte OU $332^-$. De même, les sorties des portes $330^-$ et $331^-$ sont reliées à l'entrée négative $410^-$ du circuit de réception d'ordres 41, à travers une porte OU $332^-$. Les entrées de commande des portes $330^+$ et $330^-$ sont reliées à l'unité 4 par un fil 333 et un inverseur 334, tandis que les entrées de commande des portes $331^+$ et $331^-$ sont reliées directement au fil 333. Ainsi, selon l'invention, tant qu'une ligne secourue n'est pas réparée, la ligne de secours $1_S$ est reliée au circuit de réception d'ordres 41 à travers le convertisseur $12_S$, les portes ET ouvertes $331^+$, $331^-$ et les portes OU $332^+$, $332^-$. Cependant, dès que la ligne est réparée, c'est-à-dire l'émission du signal d'alarme sur le fil 150 entre le terminal considéré et l'unité 4 cesse, la ligne numérique réparée est reliée au circuit de réception d'ordres 41 à travers les portes ET ouvertes correspondantes $320^+$, $320^-$, $330^+$, $330^-$ afin de procéder au second échange d'ordres entre les stations pour le rétablissement normal de la ligne réparée, sans interruption de l'information numérique.

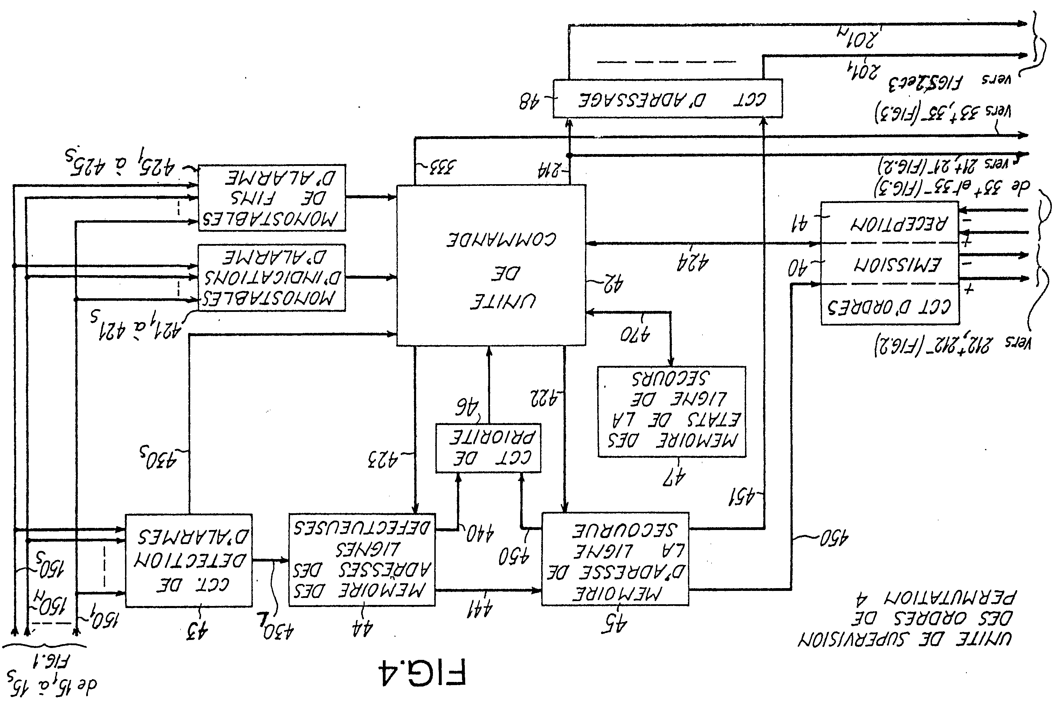

La Fig. 4 montre très schématiquement l'organisation interne de l'unité de supervision des ordres de permutation 4. On notera que l'unité 4 est de préférence organisée autour d'un microprocesseur, constituant principalement son unité de commande 42. Le logiciel de ce microprocesseur peut être adapté, non seulement au nombre N de lignes normales $1_1$ à $1_N$ et au nombre P de lignes de secours, telles que $1_S$, mais également à différentes variantes d'organisation des stations A et B (nombre de permutateurs supérieurs à 1, notamment), et de successions des phases de la procédure de sécurisation. L'état notamment des différentes mémoires citées plus loin et la commande séparée de certaines phases de la procédure peuvent être fournies et réalisées au moyen d'une console d'affichage (non représentée) de caractère alphanumérique et d'un clavier permettant la conversation homme-machine.

Outre les circuits d'émission et de réception 40, 41 et l'unité de commande 42, l'unité de supervision des ordres de permutation 4 comprend un circuit de détection d'alarmes 43, une mémoire des adresses des lignes défectueuses 44, une mémoire d'adresse de la ligne normale secourue 45, un circuit de priorité 46, une mémoire des états de la ligne de secours 47 et un circuit d'adressage 48 des lignes normales $1_1$ à $1_N$. Les rôles de ces différents circuits seront détaillés ci-après, au cours de la présentation d'exemples préférés de sécurisation.

On suppose tout d'abord que, à un instant initial donné, la ligne de secours est libre de toute transmission d'information ou d'ordres. Par suite, les mémoires 44 et 45 sont vides de toute adresse et la mémoire d'état 47 est à l'état dit « voie de secours libre ». On notera que la mémoire d'état 47 peut être composée de quatre bascules bistables qui sont commandées, à travers le bus 470 bidirectionnel, par l'unité de commande 42 et qui indiquent respectivement l'état libre, l'état occupé par la transmission des ordres, l'état occupé par la transmission d'un signal informatif correspondant à une ligne secourue $1_1$ à $1_N$ et l'état en défaut relativement à la ligne de secours. Par ailleurs, comme il est connu, seulement les circuits de réception 15 d'un terminal de ligne des deux stations indiquent, suivant les deux directions de réception respectivement pour les deux stations, les défauts de ligne. Etant donné que la réparation d'une section de ligne ou d'un pot de répéteurs nécessite la coupure momentanée de la transmission selon les deux directions, on admettra dans la suite que tout défaut détecté suivant une direction nécessite l'arrêt de la transmission sur la ligne suivant les deux directions.

Après ledit instant initial, on suppose que la ligne de transmission $1_3$ est défectueuse et que le circuit de réception $15_3$ de son terminal dans la station maintient en permanence à l'état logique « 1 » le fil $150_3$ correspondant parmi les N + 1 fins d'alarme $150_1$ à $150_N$, $150_S$. Ces derniers fils sont reliés aux entrées du circuit de détection d'alarmes 43, et à l'unité 4 à travers des bascules monostables d'indications d'alarme $421_1$ à $421_S$, d'une part, et des bascules monostables de fils d'alarme $425_1$ à $425_S$, d'autre part. Chaque fois qu'un signal d'alarme est transmis sur l'un des fils 150, la sortie de la bascule monostable correspondante 421 transmet à l'unité 42 une impulsion d'indication d'alarme.

Le circuit 43 transmet, à une cellule libre de la mémoire 44, l'adresse de la ligne correspondant au fil 150 qui passe, de l'état « 0 » (fonctionnement normal), à l'état « 1 » (alarme). Si c'est le fil $150_S$ qui a changé d'état, le circuit 43 l'indique à l'unité 42 par un signal délivré sur le fil $430_S$. Ainsi, selon l'exemple considéré, le circuit 43 délivre l'adresse de la ligne $1_3$ à travers le bus $430_L$ à la mémoire 44.

A la suite de cette phase d'enregistrement, l'unité 42 passe à l'étape suivante concernant l'analyse de la priorité de la ligne défectueuse $1_3$. Pour cela, elle ordonne à travers les bus 422 et 423 la lecture de la première cellule de la mémoire 44 qui contient l'adresse de la ligne $1_3$ et la lecture de la mémoire 45. En fait, chaque mot d'adresse transmis par le circuit de détection d'alarme 43 comporte deux parties. Une première partie est constituée du mot d'identification de la ligne défectueuse et une seconde partie est constituée d'un mot d'ordre de priorité. Ce dernier indique la priorité d'une ligne $1_1$ à $1_N$ par rapport aux autres ; c'est-à-dire, par exemple, pour deux lignes défectueuses en même temps, les mots d'ordre de priorité indiquent si l'une des lignes doit être secourue par la ligne de secours en priorité, au détriment de l'interruption de la transmission de l'information de l'autre qui sera maintenue tant que cette dernière n'est pas réparée ou qui sera secourue après réparation de la ligne prioritaire et libération de la ligne de secours. Les mots d'ordre de priorité sont alors transmis à travers les bus 440 et 450 au circuit de priorité 46 qui les compare et qui délivre à l'unité 4, sur le fil 460, un signal indiquant que la ligne actuellement secourue est prioritaire ou non par rapport à la ligne dont l'adresse vient d'être enregistrée dans la mémoire 44. Selon l'exemple précédent, la mémoire 45 étant vide, la comparaison précédente est positive, et l'unité 42 provoque l'écriture dans la mémoire 45 de l'adresse de la ligne $1_3$ lue dans la mémoire 44, à travers le bus 441.

Puis, l'unité de commande 42 passe à l'étape suivante concernant des échanges d'ordres entre les stations A et B, en émettant un signal sur le bus bidirectionnel 424 vers le circuit d'ordres 40-41 de la station A et également un signal de lecture sur le fil 422 pour transférer, via le bus 450, le mot d'adresse de la ligne $1_3$ à secourir dans le circuit d'émission d'ordres 40. Les circuits d'émission et de réception d'ordres 40-41 constituent un équipement terminal bidirectionnel du genre à traitement de données fonctionnant en mode-paquet. La procédure d'accès à ce type de terminal est par exemple celle de commande de chaînon à haut niveau dit HDLC (de l'américain « High Data Link Control »). A ce stade, ce premier échange d'ordres a pour but d'inviter la station B à déconnecter la ligne défectueuse $1_3$, si le circuit de réception $15_3$ dans la station B n'a pas transmis un signal d'alarme sur le fil correspondant $150_3$, ou à confirmer par l'une des stations à l'autre, qu'elle a détecté un signal d'alarme relatif à la ligne défectueuse $1_3$, ce qui correspond à une anomalie suivant les deux directions de transmission. Par exemple, selon le premier cas, il y a interrogation de la station B par la station A, avec transmission de l'adresse de la ligne $1_3$, et accusé de réception de la station B.

Ces signaux d'ordre sont émis par la partie d'émission 2 (Fig. 2) du permutateur de chaque station et sont reçus dans la partie réception 3 (Fig. 3) du permutateur de l'autre station, suivant les deux directions de transmission de la ligne de secours $1_S$, en cheminant à travers les éléments suivants : circuit d'émission d'ordres 40, fils $212^+$, $212^-$, portes ET ouvertes $211^+$, $211^-$, portes OU $215^+$, $215^-$, convertisseur binaire-bipolaire $11_S$ et circuit d'émission du terminal $14_S$ dans l'une des stations A ou B, puis ligne de secours $1_S$, circuit de réception du terminal $15_S$, convertisseur bipolaire-binaire $12_S$, portes ET ouvertes $331^+$, $331^-$, portes OU $332^+$, $332^-$ et circuit de réception d'ordres 41 de l'autre station B ou A.

Après détection de l'accusé de réception, transmis sous la forme d'un signal approprié sur le bus bidirectionnel 424 par le circuit de réception d'ordres 41 vers l'unité 42 de chaque station, les unités de commande 42 de chacune des stations procèdent simultanément à la phase de commutation. Cette phase permet de transmettre le signal informatif numérique du convertisseur binaire-bipolaire $10_3$ de l'une des stations A ou B vers le convertisseur binaire-bipolaire $13_3$ de l'autre station B ou A, à travers la ligne de secours $1_S$, relativement aux deux directions de transmission. Elle permet également de relier les sorties des circuits d'émission d'ordres 40 à la ligne en défaut $1_3$, les entrées $410^+$, $410^-$ des circuits de réception d'ordres 41 restant reliées à la ligne de secours $1_S$.

Pour ce faire, l'unité 42 commande, via le bus 422, le transfert de l'adresse de ligne $1_3$ de la mémoire 45 au circuit d'adressage 48, à travers le bus 451. Chaque fois que le circuit d'adressage 48 reçoit une adresse de ligne, il met à l'état « 0 » le fil correspondant de son bus de sortie, ici le fil $201_3$. Ce changement d'état est commandé par le passage de l'état « 1 » à « 0 » du fil 214 contrôlé par l'unité de commande 42. Ainsi, simultanément, dans la partie émission 2 (Fig. 2) du permutateur de chaque station :

— les portes ET $220_3^+$ et $220_3^-$ sont fermées et les portes ET $221_3^+$ et $221_3^-$ sont ouvertes, de sorte que les fils de sortie $212^+$, $212^-$ du circuit d'émission d'ordres 40 sont reliées au convertisseur binaire-bipolaire $11_3$ de la ligne $1_3$ à la sortie de la station ; et

— les portes ET $200_3^+$, $200_3^-$, $210^+$ et $210^-$ sont ouvertes et les portes ET $211^+$, $211^-$ sont fermées, afin que le signal informatif transmis par les sorties $10_3^+$, $10_3^-$ du convertisseur bipolaire-binaire $10_3$ soit délivré aux entrées $11_S^+$, $11_S^-$ du convertisseur binaire-bipolaire $11_S$ de la ligne de secours $1_S$ ;

et dans la partie réception 3 (Fig. 3) du permutateur de chaque station :

— les portes ET $311_3^+$ et $311_3^-$ sont fermées et les portes ET $300_3^+$ et $300_3^-$ sont ouvertes, afin que le signal informatif transmis de l'autre station transite dans le permutateur, des sorties $12_S^+$, $12_S^-$ du convertisseur bipolaire-binaire $12_S$ de la ligne de secours $1_S$ vers les sorties $13_3^+$, $13_3^-$ du convertisseur binaire-bipolaire $13_3$ ; et

— les portes ET $320_3^+$ et $320_3^-$ sont ouvertes afin d'être prêtes à recevoir des signaux d'ordre après réparation de la ligne $1_3$ ; cependant, les portes ET $330^+$, $330^-$ sont maintenues fermées et les portes ET $331^+$, $331^-$ sont maintenues ouvertes, afin que le signal informatif numérique transmis par la ligne de secours soit reçu aux entrées $410^+$, $410^-$ du circuit de réception.

Le circuit 41 n'étant plus en phase d'échanges d'ordres inhibe l'information reçue présentement, mais cependant est propre à recevoir des signaux d'ordre par la ligne de secours $1_S$, au cas où une ligne prioritaire sur la ligne $1_3$ viendrait en défaut, comme on le verra dans la suite.

Si le circuit de réception 41 n'était pas relié à la ligne de secours, à ce stade de la procédure, c'est-à-dire s'il était relié aux sorties du convertisseur bipolaire-binaire $12_3$ de la ligne $1_3$ à réparer, aucun ordre ne pourrait être échangé entre les stations A et B avant réparation de la ligne $1_3$.

Il apparaît ainsi que cette première commutation n'interrompt pas pratiquement l'information, normalement véhiculée sur la ligne défectueuse $1_3$, puisque celle-ci est transférée instantanément sur la ligne de secours $1_S$ dès la détection du signal d'alarme sur un fil $150_3$.

Après réparation *in situ* de la ligne $1_3$, chaque fil $150_3$ revient à l'état « 0 » dans les stations A et B. Ce changement d'état est détecté, par une bascule monostable $425_3$ qui transmet une impulsion dite de fin d'alarme à l'unité de commande 42 (Fig. 4). Dans les deux stations, les fils 333 sont mis simultanément à l'état « 0 » sous la commande des unités 42. Ceci provoque, dans la partie réception 3 (Fig. 3) de chaque permutateur, la fermeture des portes $331^+$, $331^-$ et l'ouverture des portes $330^+$, $330^-$. Par suite, les stations A et B peuvent se confirmer le rétablissement de la ligne $1_3$, suivant un cheminement des seconds signaux d'ordre pour les deux directions de transmission tel que : circuits d'émission d'ordres 40, portes ET ouvertes $221_3^+$, $221_3^-$, portes OU $223_3^+$, $223_3^-$ et convertisseur binaire-bipolaire $11_3$ dans la partie émission 2 (Fig. 2) de l'une des stations A ou B, et convertisseur bipolaire-binaire $12_3$, portes ET ouvertes $320_3^+$, $320_3^-$, portes OU $321^+$, $321^-$, portes ET ouvertes $330^+$, $330^-$, portes OU $332^+$ et circuit de réception d'ordres 41 dans la partie réception 3 (Fig. 3) de l'autre station B ou A.

Ce second échange d'ordres effectué, les unités de commande 42 des stations A et B établissent l'inverse de la commutation initiale afin de rétablir normalement la transmission sur la ligne réparée $1_3$. Pour ce faire, dans chaque station, les fils $201_3$, 214 et 333 sont remis à l'état « 1 ». Dans la partie émission 2 (Fig. 2) de chaque permutateur, les portes ET $220_3^+$, $220_3^-$ sont à nouveau ouvertes et les portes ET $221_3^+$, $221_3^-$ sont fermées. Dans la partie réception 3 (Fig. 3) de chaque permutateur, les portes ET $311_3^+$,

$311_3^-$ sont à nouveau ouvertes et les portes ET $300_3^+$, $300_3^-$ sont fermées. Ceci rétablit la transmission normale, à travers la ligne $1_3$, du convertisseur bipolaire-binaire $10_3$ de l'une des stations au convertisseur binaire-bipolaire $13_3$ de l'autre station. En outre, un échange d'ordres à travers la ligne de secours $1_S$ peut être à nouveau effectué, puisque les portes ET $200_3^+$, $200_3^-$, $210^+$, $210^-$, $320_3^+$, $320_3^-$, $330^+$, $330^-$ sont maintenant fermées et les portes ET $211^+$, $211^-$, $331^+$, $331^-$ sont à nouveau ouvertes. A la fin de cette étape, la mémoire d'adresse 45 est remise à zéro et la mémoire 47 passe à l'état dit « libre » ou « occupé par des ordres ».

D'autres variantes de la succession des étapes de la procédure de sécurisation d'une ligne en défaut peuvent être commandées par une unité de commande 42. Ces variantes dépendent principalement des états des mémoires 45 et 47 lorsqu'un signal d'indication d'alarme est transmis par la bascule monostable 421 à l'unité de commande 42.

Si la mémoire d'adresse 45 contient l'adresse d'une ligne actuellement secourue, par exemple $1_8$, et donc si la mémoire d'état 47 indique l'occupation de la ligne de secours, deux cas peuvent se présenter. Un premier cas concerne la priorité de la ligne de secours $1_8$ sur la dernière ligne défaillante $1_3$. La comparaison dans le circuit de priorité 46 est alors négative et la ligne $1_3$ ne sera pas secourue tant que la ligne $1_8$ ne sera pas réparée. A cet égard, à la fin de chaque procédure de sécurisation rétablissant le fonctionnement de la ligne précédemment secourue, l'unité 42 lit les cellules de la mémoire 44 correspondant aux lignes, telles que $1_3$, en attente d'être secourue. L'unité 42 effectue la procédure de sécurisation de la ligne en panne la plus prioritaire. Si deux lignes défectueuses ont un même niveau de priorité, l'une d'elles est sélectionnée arbitrairement pour être secourue.

Par contre, si la ligne actuellement secourue $1_8$ n'est pas prioritaire sur la ligne $1_3$, la comparaison des mots de priorité dans le circuit 46 est positive. Si, à cet instant, la mémoire 47 est à l'état « occupé par des ordres », l'unité de commande 42 délivre à travers le bus 424 au circuit d'émission d'ordres un signal indiquant que la procédure en cours doit être annulée et doit être substituée à une nouvelle procédure de sécurisation concernant la ligne $1_3$. La ligne de secours $1_S$ étant en relation directe avec les circuits d'ordres, aucune commutation n'est nécessaire pour débuter la nouvelle procédure de sécurisation.

La mémoire 47 est à l'état « occupé par la transmission d'un signal informatif ». Dans le cas présent, ce signal est celui qui aurait dû être normalement transmis par la ligne $1_8$. Il est alors nécessaire de rétablir la connexion normale relative à la ligne $1_8$, bien que celle-ci soit défectueuse, avant de procéder à la sécurisation de la ligne prioritaire $1_3$. Pour cela, l'information correspond à la ligne $1_8$, transmise sur la ligne de secours, est interrompue selon les deux sens de transmission, avant d'échanger des ordres sur la ligne de secours $1_S$ entre les deux stations. Puis, simultanément, dans les deux stations :

— les portes ET $220_8^+$, $220_8^-$ sont ouvertes et les portes ET $221_8^+$, $221_8^-$ sont fermées, ce qui relie les convertisseurs $10_8$ et $11_8$ et les portes ET $200_8^+$, $200_8^-$, $210^+$, $210^-$ sont fermées et les portes ET $211^+$, $211^-$ sont ouvertes, ce qui relie les sorties $212^+$, $212^-$ du circuit d'émission d'ordres 40 aux entrées $11_S^+$, $11_S^-$ du convertisseur binaire-bipolaire $11_S$ de la ligne de secours $1_S$ (Fig. 2) ; et

— les portes ET $320_8^+$, $320_8^-$, $300_8^+$, $300_8^-$ sont fermées et les portes ET $311_8^+$, $311_8^-$ sont ouvertes, ce qui relie les convertisseurs $12_8$ et $13_8$ (Fig. 3).

La procédure de sécurisation décrite ci-dessus est alors initialisée relativement à la ligne $1_3$.

Enfin, un dernier cas concerne l'état de la mémoire 47 indiquant une défaillance de la ligne de secours $1_S$. Ceci a été signalé par le passage à l'état « 1 » du ou des deux fils $150_S$ reliés aux terminaux de la ligne de secours et, à l'une des unités 42, par un signal délivré sur le fil $430_S$ par le circuit de détection d'alarme 43. Dans ce cas, toute nouvelle alarme est sans effet, les lignes défectueuses restant dans leur état de communication initial, et la procédure de la ligne éventuellement secourue à ce stade est poursuivie si elle n'est pas à l'étape du premier échange d'ordres. Dans le cas contraire, la ligne qui aurait dû être secourue est maintenue dans son état initial, les convertisseurs correspondants 10 et 11 restant connectés et les convertisseurs correspondants 12 et 13 restant également connectés dans chacune des stations.

Selon une autre variante (non représentée) d'organisation des stations d'extrémité A et B, l'artère de lignes $1_1$ à $1_N$ comporte, pour sa sécurisation, P lignes de secours $1_{S1}$ à $1_{SP}$. Par exemple, si N = 19, P est égal à 3. La partie émission 2 du permutateur de chaque station comprend P circuits de sélection $20_1^+$-$20_1^-$ à $20_P^+$-$20_P^-$ et P circuits de commutation $21_1^+$-$21_1^-$ à $21_P^+$-$21_P^-$ qui sont respectivement identiques à ceux décrits $20^+$-$20^-$ et $21^+$-$21^-$. Toutes les portes ET $200^+$-$200^-$ à même indice dans les circuits $20_1^+$-$20_1^-$ à $20_P^+$-$20_P^-$ ont respectivement leurs entrées numériques reliées mais, par contre, sont commandées par des fils de commande séparés. Le bus de sortie du circuit d'adressage 48 de l'unité de supervision des ordres de permutation 4 comporte N × P fils $201_1$ à $201_{NP}$. P fils, tels que 214 commandent les circuits de commutation $21_1^+$-$21_1^-$ à $21_P^+$-$21_P^-$. Les fils de commande, tels que $201_1$, $201_{P+1}$, $200_{2P+1}$ ... commandent, via une porte OU, l'ouverture et la fermeture des portes ET insérées dans les circuits de sélection tels que $22_1$. De même, la partie réception 3 du permutateur de chaque section comprend P circuits de sélection $32_1^+$-$32_1^-$ à $32_P^+$-$32_P^-$, P circuits de commutation $30_1^+$-$30_1^-$ à $30_P^+$-$30_P^-$, et P circuits de commutation $33_1^+$-$33_1^-$ à $33_P^+$-$33_P^-$ commandés, à travers un bus de P fils $333_1$ à $333_P$, par

l'unité 4. En outre, cette unité 4 comprend P mémoires d'état des lignes de secours $47_1$ à $47_P$, une mémoire d'adresses de lignes secourues 45 à P cellules et P circuits d'ordre $40_1$-$41_1$ à $40_P$-$41_P$. Une telle organisation confère simultanément la sécurisation de P lignes normales parmi N. Chaque fois qu'une alarme est détectée par l'unité 4, l'état des différentes lignes de secours est lu et la première détectée « libre » est assignée à la transmission de l'information de la ligne défectueuse. En pratique, ceci se traduit par aucune interruption de la transmission des informations sur l'artère de transmission complète, car la probabilité pour que P = 3 lignes normales soient simultanément en défaut est quasiment nulle.

Enfin, selon une autre variante, au lieu qu'un permutateur soit associé à P lignes de secours dans chaque station, il peut être prévu P permutations et P unités de supervision des ordres de permutation. L'artère de transmission comporte alors P × N lignes normales et P lignes de secours. Chaque partie émission d'un permutateur comporte P circuits de sélection, tels que celui illustré $20^+$-$20^-$, dont un est pourvu de 2 (P-1) portes ET respectivement reliées aux portes OU $204^+$ et $204^-$ (Fig. 2) qui permettent de relier les sorties des parties émission des autres permutateurs avec l'entrée de la partie émission du permutateur considéré. Les sorties des portes OU $204^+$ et $204^-$ des autres P-1 circuits de sélection permettent de relier les P-1 sorties de la partie émission du permutateur considéré avec des entrées des parties émission des autres permutateurs. De même, la partie réception d'un permutateur comporte, selon cette variante, P circuits de commutation, tels que $30^+$-$30^-$ permettant de relier la ligne de secours du permutateur considéré et des sorties des P-1 autres permutateurs audit permutateur considéré, et P-1 autres circuits de commutation qui permettent de relier la ligne de secours du permutateur considéré à des entrées des P-1 autres permutateurs. Une telle organisation contribue également à améliorer la sécurisation, car si la ligne de secours d'un permutateur est déjà utilisée pour la transmission d'information, une ligne de secours libre d'un autre permutateur peut être utilisée pour convoyer l'information assignée à une seconde ligne défectueuse relative au premier permutateur considéré. Bien entendu, selon cette dernière variante, il y a échange d'ordres direct entre les unités 4 d'une même station.

## Revendications

1. Procédé de sécurisation d'une ligne normale de transmission numérique bidirectionnelle incluse dans une artère à N lignes normales de transmission numérique bidirectionnelle ($1_1$-$1_N$) et à P lignes de secours numériques bidirectionnelles ($1_S$) entre deux stations d'extrémité (A, B) comprenant chacune un permutateur bidirectionnel (2, 3) commandé par une unité de supervision des ordres de permutation (4), procédé selon lequel, en réponse à une alarme relative à un défaut sur une ligne normale ($1_1$-$1_N$), les deux permutateurs procèdent à un premier échange d'ordres à travers une ligne de secours présélectionnée ($1_S$), puis à une première permutation de l'information relative à la ligne en défaut ($1_3$) vers la ligne de secours ($1_S$) et, après réparation et arrêt de ladite alarme, à un second échange d'ordres à travers ladite ligne réparée ($1_3$), pendant que l'information relative à ladite ligne réparée continue à être transmise à travers une ligne de secours présélectionnée ($1_S$), et à une seconde permutation de l'information, précédemment transmise sur la ligne de secours ($1_S$), vers la ligne réparée ($1_3$), caractérisé en ce que, depuis le début du premier échange d'ordres et jusqu'avant le second échange d'ordres, des ordres peuvent être reçus dans chaque permutateur (3) à travers la ligne de secours présélectionnée ($1_S$) en réponse à une alarme relative à un défaut sur une autre ligne normale ($1_8$) et en ce que, tant que l'alarme relative à la première ligne en défaut ($1_3$) est présente, des ordres transmis par l'un des permutateurs (A, B) à travers ladite première ligne ($1_3$) ne peuvent pas être reçus par l'autre permutateur (B, A).

2. Procédé de sécurisation conforme à la revendication 1, caractérisé en ce que, dès la première permutation et jusqu'à la fin du second échange d'ordres, des ordres peuvent être émis à travers la ligne en défaut ($1_3$) à partir de chaque permutateur (2).

3. Installation de sécurisation pour la mise en œuvre du procédé conforme à la revendication 1 ou 2, caractérisée en ce que, relativement à chaque ligne de transmission normale ($1_3$), la partie émission (2) de chaque permutateur comprend des moyens de commutation ($22_3$), normalement transparents à l'information convoyée par la ligne ($1_3$), pour permettre la transmission d'ordres par l'unité de supervision (4) sur ladite ligne ($1_3$) après ledit premier échange d'ordres, et la partie réception (3) de chaque permutateur comprend des moyens de commutation (32, 33), normalement transparents aux ordres et à l'information convoyés par la ligne de secours présélectionnée ($1_S$) pendant le premier échange d'ordres et la durée de réparation de la ligne en défaut ($1_3$) pour que l'unité de supervision (4) reçoive, à travers la ligne normale réparée, les ordres dudit second échange en réponse à l'arrêt de ladite alarme, lesdits moyens de commutation revenant à leur état normal lors de ladite seconde permutation.

4. Installation de sécurisation conforme à la revendication 3, dans laquelle, pour chaque ligne normale ($1_1$-$1_N$), la partie émission (2) du permutateur d'une station (A) est interconnectée entre un premier convertisseur bipolaire-binaire (10) et un premier convertisseur binaire-bipolaire (11) du côté de l'autre station (B) et la partie réception (3) du permutateur d'une station (A) est interconnectée entre un second convertisseur bipolaire-binaire (12) du côté de l'autre station (B), et un second convertisseur binaire-bipolaire (13), les moyens de commutation (22 ; 32-33) étant analogues à des commutateurs bipolaires à deux positions commandées par les unités de supervision (4), caractérisée en ce que les moyens de commutation (22) de la partie émission (2) d'un permutateur relatif à une ligne normale ($1_1$-$1_N$) ont une première paire de bornes d'entrée reliées aux sorties du premier convertisseur bipolaire-binaire (10), une seconde paire de bornes d'entrée reliées aux sorties (212) des moyens d'émission d'ordres (40) de l'unité de supervision (4) et une paire de bornes de sortie reliée aux entrées du premier convertisseur binaire-bipolaire (11), et en ce que les moyens de commutation (32-33) de la partie réception (3) d'un permutateur relatifs à une ligne normale ($1_1$-$1_N$) ont une première paire de bornes d'entrée (331) reliées aux sorties du convertisseur bipolaire-binaire ($12_S$) de la ligne de secours ($1_S$), une seconde paire de bornes d'entrée (320-330) reliées aux sorties du second convertisseur bipolaire-binaire (12) et une paire de bornes de sortie (332) reliées aux entrées des moyens de réception d'ordres (41) de l'unité de supervision (4).

## Claims

1. Process for relieving a bidirectional digital transmission working line included in a link having N bidirectional digital transmission working lines ($1_1$-$1_N$) and P bidirectional digital transmission spare lines ($1_S$) connected between two end stations (A, B) each comprising a bidirectional switching-over means (2, 3) controlled by a unit (4) for monitoring switch-over orders, process wherein, in response to an alarm relative to a fault in a working line ($1_1$-$1_N$), two switching-over means perform a first order exchange through a preselected spare line ($1_S$), then a first switch-over of the data related to the faulty line ($1_3$) to the spare line ($1_S$) and, after repair and ceasing of said alarm, a second order exchange through said repaired line ($1_3$), whilst the data relative to said repaired line continues to be transmitted through a pre-selected spare line ($1_S$), and a second switch-over of the data, previously transmitted on the spare line ($1_S$), to the repaired line ($1_3$), characterized in that, since the start of the first order exchange and upto before the second exchange order, orders can be received in each switching-over means (3) through the preselected spare line ($1_S$) in response to an alarm relative to a fault in another working line ($1_8$) and in that, as long as the alarm relative to the first faulty line ($1_3$) is prevalent, orders transmitted by one of the switching-over means (A, B) through said first line ($1_3$) cannot be received by the other switching-over means (B, A).

2. Relieving process according to claim 1, characterized in that right from the first switch-over upto the end of the second order exchange, orders can be emitted through the faulty line ($1_3$) from each switching-over means (2).

3. Relieving arrangement designed for carrying out the process according to claim 1 or 2, characterized in that, in relation to each working transmission line $(1_3)$, the transmitting part (2) in each switching over means comprises switching means $(22_3)$ normally transparent to the data conveyed by line $(1_3)$ in order to allow the transmission of orders from the monitoring unit (4) on said line $(1_3)$ after said first order exchange, and the receiving part (3) of each switching-over means comprises switching means (32, 33) normally transparent to the orders and the data conveyed by the pre-selected spare line $(1_S)$ throughout the first order exchange and the duration of the faulty line $(1_3)$ repair such that the monitoring unit (4) receives, through the repaired working line, the orders of said second exchange in response to the ceasing of said alarm, said switching means reverting to their normal state when comes said second switch-over.

4. Relieving arrangement according to claim 3, wherein, for each working line $(1_1-1_N)$, the transmitting part (2) of the switching-over means in one station (A) is interconnected between a first bipolar-to-binary converter (10) and a first binary-to-bipolar converter (11) on the side of the other station (B) and the receiving part (3) of the switching-over means of one station (A) is interconnected between a second bipolar-to-binary converter (12) on the side of the other station (B) and a second binary-to-bipolar converter (13) and wherein the switching means (22 ; 32-33) are analogous with two-position bipolar switches controlled by the monitoring units (4), characterized in that the switching means (22) of the transmitting part (2) of a switching-over means relative to a working line $(1_1-1_N)$ have a first pair of input terminals connected to the outputs of the first bipolar-to-binary converter (10), a second pair of input terminals connected to the outputs (212) of the order emitting means (40) in the monitoring unit (4) and a pair of output terminals connected to the inputs of the first binary-to-bipolar converter (11), and in that the switching means (32-33) of the receiving part (3) of a switching-over means relative to a working line $(1_1-1_N)$ have a first pair of input terminals (331) connected to the outputs of the bipolar-to-binary converter $(12_S)$ of the spare line $(1_S)$, a second pair of input terminals (320-330) connected to the outputs of the second bipolar-to-binary converter (12) and a pair of output terminals (332) connected to the inputs of the order receiving means (41) in the monitoring unit (4).

## Ansprüche

1. Verfahren zur Sicherung einer Dienstleitung für die numerische Zweiwegübertragung in einer Hauptleitung mit N Dienstleitungen $(1_1-1_N)$ für die numerische Zweiwegübertragung und P Notleitungen $(1_S)$ für die numerische Zweiwegübertragung zwischen zwei Endstationen (A, B) mit je einem von einer Schaltbefehlsüberwachungseinheit (4) gesteuerten Zweirich-

tungsumschalter (2, 3), wobei als Reaktion auf einen Alarm auf einer Dienstleitung $(1_N-1_1)$ die beiden Umschalter einen ersten Befehlsaustausch über eine vorgewählte Notleitung $(1_S)$, danach eine erste Umschaltung der Information auf der defekten Dienstleitung $(1_3)$ auf die Notleitung $(1_S)$ sowie nach Ausführung der Reparatur und Einstellung des Alarms einen zweiten Befehlsaustausch über die reparierte Leitung $(1_3)$ vornehmen, während die zu der reparierten Leitung gehörige Information weiter über eine vorgewählte Notleitung $(1_S)$ übertragen wird, und weiter eine zweite Umschaltung der zuvor über die Notleitung $(1_S)$ übertragenen Information auf die reparierte Leitung $(1_3)$ vornehmen, dadurch gekennzeichnet, daß vom Beginn des ersten Befehlsaustauschs und bis vor den zweiten Befehlsaustausch in jedem Umschalter (3) über die vorgewählte Notleitung $(1_S)$ Befehle in Erwiderung auf einen Alarm wegen einer Störung auf einer anderen Dienstleitung $(1_8)$ empfangen werden können und daß, solange der Alarm für die erste gestörte Leitung $(1_3)$ vorliegt, Befehle, welche einer der Umschalter (A, B) über die erste Leitung $(1_3)$ überträgt, von dem anderen Umschalter (B, A) nicht empfangen werden können.

2. Verfahren zur Sicherung nach Anspruch 1, dadurch gekennzeichnet, daß von der ersten Umschaltung bis zum Ende des zweiten Befehlsaustausches Befehle über die gestörte Leitung $(1_3)$ von jedem Umschalter (2) gesendet werden können.

3. Anlage zur Sicherung zur Ausführung des Verfahrens nach Anspruch 1 oder 2, dadurch gekennzeichnet, daß für jede Dienstleitung $(1_3)$ der Sendeteil (2) jedes Umschalters Schalteinrichtungen $(22_3)$ umfaßt, die normalerweise für die von der Leitung $(1_3)$ geführte Information durchlässig sind, um die Übertragung von Befehlen durch die Überwachungseinheit (4) auf die Leitung $(1_3)$ nach dem ersten Befehlsaustausch zu gestatten, und daß der Empfängerteil (3) jedes Umschalters Schalteinrichtungen (32, 33) umfaßt, die normalerweise für die Befehle und die Information durchlässig sind, die auf der vorgewählten Notleitung $(1_S)$ während des ersten Befehlsaustauschs und des Reparaturzeitraums der gestörten Leitung $(1_3)$ geführt werden, damit die Überwachungseinheit (4) über die reparierte Dienstleitung die Befehle des zweiten Austauschs in Abhängigkeit vom Ende des Alarms empfängt, wobei die Schalteinrichtungen bei der zweiten Umschaltung in ihren Normalzustand zurückkehren.

4. Anlage zur Sicherung nach Anspruch 3, in welcher für jede Deinstleitung $(1_1-1_N)$ der Sendeteil (2) des Umschalters einer Station (A) zwischen einen ersten Bipolar-Binär-Umsetzer (10) und einen der anderen Station (B) zugeordneten ersten Binär-Bipolar-Umsetzer (11) geschaltet ist und der Empfängerteil (3) des Umschalters einer Station (A) zwischen einen zweiten Bipolar-Binär-Umsetzer (12) der anderen Station (B) und einen zweiten Binär-Bipolar-Umsetzer (13) geschaltet ist, wobei die Schalteinrichtungen (22 ; 32-33) zweipoligen Schaltern mit zwei von den Überwachungseinheiten (4) gesteuerten Schaltstellungen entsprechen, dadurch gekennzeichnet, daß die Schalteinrichtungen (22) des Sendeteils (2) eines Umschalters für eine Dienstleitung ($1_1$-$1_N$) ein erstes, mit den Ausgängen des ersten Bipolar-Binär-Umsetzers (10) verbundenes Paar von Eingangsklemmen, ein zweites, mit den Ausgängen (212) der Befehlssendeeinrichtung (40) der Überwachungseinheit (4) verbundenes Paar Eingangsklemmen und ein mit den Eingängen des ersten Binär-Bipolar-Umsetzer (11) verbundenes Paar von Ausgangsklemmen aufweisen und daß die Schalteinrichtungen (32-33) des Empfängerteils (3) eines Umschalters für eine Dienstleitung ($1_1$-$1_N$) ein erstes, mit den Ausgängen des Bipolar-Binär-Umsetzers ($12_S$) der Notleitung ($1_S$) verbundenes Paar Eingangsklemmen (331), ein zweites, mit den Ausgängen des zweiten Bipolar-Binär-Umsetzers (12) verbundenes Paar Eingangsklemmen (320-330) und ein mit den Eingängen der Befehlsempfangseinrichtung (41) der Überwachungseinheit (4) verbundenes Paar von Ausgangsklemmen (332) aufweisen.

# FIG.1

PARTIE EMISSION D'UN PERMUTATEUR

FIG.3

0 032 327

PARTIE
RECEPTION
D'UN
PERMUTATEUR

FIG.4